# EUROPÄISCHE PATENTSCHRIFT

(11) **EP 1 083 420 B1**
(45) Veröffentlichungstag und Bekanntmachung des Hinweises auf die Patenterteilung: **10.04.2002**
(21) Anmeldenummer: 00118595.8
(22) Anmeldetag: 28.08.2000
(51) Int. Cl.: G01G 21/24, G01L 1/22, G01L 1/26

(54) **Vorrichtung zur Kraftuntersetzung in einer Kraftmessvorrichtung**
Device for reducing the force in a force measuring device
Dispositif pour réduire la force dans un appareil de mesure de force

(30) Priorität: 11.09.1999 DE 19943439
(43) Veröffentlichungstag der Anmeldung: 14.03.2001
(73) Patentinhaber: Mettler-Toledo GmbH, 8606 Greifensee (CH)
(72) Erfinder: Emery, Jean-Christophe, 8603 Schwerzenbach (CH); Köppel, Thomas, Dr., 8610 Oetwil (CH); Iseli, Marc, 8606 Greifensee (CH)

(56) Entgegenhaltungen:
- EP-A- 0 518 202
- DE-A- 4 305 425
- DE-U- 29 613 668
- US-A- 5 866 854

## Beschreibung

Die Erfindung bezieht sich auf eine Vorrichtung zur Kraftuntersetzung in einer Kraftmessvorrichtung nach dem Oberbegriff des Anspruches 1.

Aus der EP 0 518 202 B1 sind Vorrichtungen zur Kraftuntersetzung in einer Kraftmessvorrichtung bekannt, die eine Kraft mit mindestens einem an einem Ständer abgestützten Hebel untersetzen, wobei die Kraft über eine Koppel auf diesen Hebel übertragen wird und der Ständer, die Koppel und der Hebel von gegeneinander abgetrennten Materialbereichen eines einstückigen Materialblocks gebildet sind. Um grosse Untersetzungen zu erzielen, sind Ausführungsbeispiele mit zwei und drei hintereinander geschalteten, bzw. über Koppeln miteinander verbundenen, Hebeln beschrieben. Die Hebel haben eine Mächtigkeit, die ihrer Belastung entspricht und sie sind im wesentlichen direkt übereinander angeordnet. Die Schwenkpunkte bzw. - achsen der Hebel sind Abstützstellen und werden als Biegestellen ausgebildet, über die der jeweilige Hebel mit dem Ständer verbunden ist. Wenn nun eine grosse Kraft über die Hebel in einen gewünschten Kraftbereich untersetzt wird, wirken die Hebel mit entsprechend grossen Kräften bei den Abstützstellen auf den Ständer. Der Ständer muss somit zwischen seinem Befestigungsbereich und allen Abstützstellen genügend massiv ausgebildet werden. Daher muss der Ständer eine vorgegebene minimale Festigkeit mit einer entsprechenden geometrischen Ausdehnung gewährleisten. Entsprechend wird ein vorgegebener Teilbereich des einstückigen Materialblocks für den Ständer beansprucht. Die gängigerweise verwendeten Materialblöcke haben Platz für zwei oder gegebenenfalls drei Hebel und einen entsprechend dimensionierten Ständer, sowie eine aussen angeordnete Parallelogrammführung mit zwei parallelen Lenkern, einem festen und einem beweglichen Lenker.

Wenn nun, wie in der EP 0 518 202 B1 erwähnt, zur Erzielung grösserer Untersetzungen, weitere Hebel vorgesehen werden, so muss ein grösserer Materialblock verwendet werden, oder der Ständer muss um das zusätzliche Hebelvolumen verkleinert werden. Jeder zusätzliche Hebel muss an einer entsprechend stabilen Stelle des Ständers abgestützt werden. Die aneinander anschliessenden Hebel werden im wesentlichen zueinander parallel verlaufend angeordnet. Das heisst, die Linien durch die Koppel und die Biegestelle je eines Hebels verlaufen im wesentlichen parallel. Dadurch sind die Anordnungsmöglichkeiten der Hebel, des Ständers, der Biegestellen und der Koppel eingeschränkt. Die Biegestellen bzw. die Schwenkachsen aneinander anschliessender Hebel liegen alternierend bei den entgegengesetzten Endbereichen der Hebel. Entsprechend wird der Ständer im Mittelbereich zwischen den Biegestellen der einen und der anderen Seite durch dort angeordnete Hebel geschwächt. Daher kann auf einem Materialblock gängiger Grösse keine Erhöhung der Hebelzahl ohne Beeinträchtigung der Stabilität erzielt werden. Der Einsatz eines grösseren Materialblocks ist aber nicht erwünscht, da die Kraftübertragungsvorrichtung lediglich ein in ein Messsystem passendes Teil ist. Bei einer Änderung der Grösse dieses Teiles, müssten auch andere, insbesondere Standardteile angepasst werden.

Der Erfindung liegt nun die Aufgabe zugrunde, eine Vorrichtung zur Kraftuntersetzung zu finden, die grosse Kraftuntersetzungen bei kleinem Platzbedarf ermöglicht.

Diese Aufgabe wird durch die Merkmale des Anspruches 1 gelöst. Die abhängigen Ansprüche beschreiben alternative bzw. vorteilhafte Ausführungsvarianten.

Im Rahmen der vorliegenden Erfindung wurde erkannt, dass die ausschliessliche Verwendung von Hebeln mit festen Schwenkachsen, bzw. Schwenkgelenken die Anordnung weiterer Hebel und deren Untersetzungswirkung stark einschränkt. Weil die Verbindung der aneinander anschliessenden Hebel über Koppel erfolgt, die nur auf Zug belastbar sind, muss bei am Ständer abgestützten Hebeln spätestens die Verbindung vom zweiten zum dritten Hebel mit einem platzaufwendigen Übergriff gestaltet werden. Gemäss den Fig. 5 und 7 der EP 0 518 202 B1 erstreckt sich beispielsweise bereits der erste Hebel seitlich aussen über den zweiten Hebel. Ein solcher Übergriff muss einen stossbelastbaren Hebelteil und eine zugbelastbare Koppel umfassen. Der stossbelastbare Hebelteil erstreckt sich seitlich vom einen Hebel über den anderen und schränkt somit die mögliche Länge des vom Übergriff umschlossenen Hebels unnötig ein. Dies ist unerwünscht, weil ja die Hebel ohnehin immer kürzer werden, um eine Abstützung jedes Hebels am Ständer, bzw. eine feste Schwenkachse zu ermöglichen.

Es wurde nun erkannt, dass die erzielbare Untersetzungsdichte, bzw. die Untersetzung im Verhältnis zur beanspruchten Volumen bzw. zur grossen Seitenfläche des Materialblocks, mit mindestens einem weiteren Hebel, der eine relativ zum Ständer bewegliche Schwenkachse hat, erhöht werden kann. Zu den Hebeln mit bewegten Schwenkachsen, gehören Hebel, die an einem vorgeordneten Hebel gelagert sind und Kniehebel. Bei den an einem vorgeordneten Hebel gelagerten bzw. abgestützten Hebeln, ist die bewegliche Schwenkachse mit diesem vorgeordneten Hebel etwas bewegbar. Ein Kniehebel umfasst einen eine Kraft einleitenden Arm, einen weiterleitenden Arm und einem verankerten Arm, wobei die drei Arme bei der Schwenkachse miteinander verbunden sind. Beim Einwirken einer Kraft auf den einleitenden Arm wird die Schwenkachse etwas bewegt. Die Hebel mit bewegbaren Schwenkachsen benötigen keine Stosskräfte aufnehmende Abstützung am Ständer und auch keinen für die Übersetzung unwirksamen Platz für einen Übergriff. Diese Hebel können bezüglich der erzielbaren Untersetzung effizienter bzw. platzsparender angeordnet werden. Weil kein Platz für eine übergreifende Kraftübertragung benötigt wird, kann die gesamte Ausdehnung aller Hebel untersetzungsaktiv eingesetzt werden.

Bei der Verwendung mindestens eines, an einem vorgeordneten Hebel abgestützten, weiteren Hebels, kann dieser von den vorgeordneten Hebeln vollständig umschlossen sein. Dabei führt dieser umschlossene Hebel weder zu einschränkenden Gestaltungsbedingungen für die Form des Ständers noch für die untersetzungswirksame Ausdehnung der umschliessenden Hebel. Vom letzten Hebel ist auch bei den bekannten Vorrichtungen jeweils nur ein erster Teil im Materialblock ausgebildet. Der andere Teil des letzten Hebels ist an zwei Bohrungen durch den ersten Teil befestigt und erstreckt sich gabelförmig beidseits des Materialblocks beispielsweise zu einer Mess- bzw. Kompensationsvorrichtung. Dies ist auch ausgehend von einem umschlossenen Hebelteil möglich. Mit einer ineinander geschachtelten bzw. spiralförmigen Anordnung der Hebel ist gewährleistet, dass die aneinander anschliessenden Hebel auch bei mehr als zwei Hebeln zur Verbindung lediglich Koppel und keine stossbelastbaren übergreifenden Hebelteile benötigen.

Modelrechungen und experimentelle Bestimmungen zeigen, dass die totale Unter- bzw. Übersetzung der Hebelanordnung mit mindestens einem an einem vorgeordneten Hebel gelagerten Hebel etwas verstärkt wird, im Vergleich zum Produkt der Übersetzungsfaktoren der einzelnen Hebel. Bei einer Anordnung mit drei Hebeln, von denen der dritte am ersten abgestützt bzw. gelagert ist, wurde die Untersetzung bestimmt. Der erste Hebel hatte in diesem Beispiel einen kurzen und einen langen Arm mit den Längen 11.8 bzw. 66.2mm. Der zweite Hebel hatte einen kurzen und einen langen Arm mit den Längen 4.5 bzw. 52mm und der dritte Hebel hatte einen kurzen und einen gabelförmig über den Materialblock hinaus verlängerten Arm mit den Längen von 4.5 bzw. 101mm. Das Produkt der Untersetzungsfaktoren jedes einzelnen Hebels würde eine Untersetzung von 1/1455 ergeben. Mit der Korrektur aufgrund des am ersten Hebel gelagerten dritten Hebels ergibt sich eine effektive Untersetzung von 1/1484. Bei einem am ersten Hebel gelagerten dritten Hebel hängt die Korrektur bzw. die effektive Untersetzung auch von der Distanz zwischen dem Lager des ersten und dem Lager des dritten Hebels ab. Im vorliegenden Fall hat diese Distanz einen Wert von 14.2mm. Das heisst also, dass die Untersetzung aufgrund der Lagerung eines Hebels an einem vorgeordneten Hebel erhöht wird. Dies ist nebst dem kleineren Platzbedarf ein weiterer Vorteil einer erfindungsgemässen Lösung mit mindestens einem Hebel, der an einem vorgeordneten Hebel gelagert ist.

Bei der Verwendung mindestens eines Kniehebels mit einem eine Kraft einleitenden, einem weiterleitenden und einem verankerten Arm treten im Kniehebel und bei dessen Verankerung am Ständer im wesentlichen Zugkräfte auf, die mit kleinen Materialstärken übertragbar sind. Das Untersetzungsverhältnis hängt beim Kniehebel von einem Winkel und nicht von Längenverhältnissen ab. Darum können sehr grosse Untersetzungsverhältnisse auf kleinstem Raum erzielt werden. Weil bei den gängigen Vorrichtungen zur Kraftuntersetzung die zu untersetzende Kraft auf einen ersten, im wesentlichen horizontal verlaufenden, Hebel wirkt und ein letzter Hebel sich gabelförmig beidseits des Materialblocks in horizontaler Richtung zu einer Messbzw. Kompensationsvorrichtung erstreckt, müssen die zwischengeordneten Hebel über vertikale Koppel an diese horizontalen Hebel anschliessbar sein. Um nebst den kraftuntersetzenden Hebeln nicht auch noch kraftumlenkende Hebel zu benötigen, wird nun vorzugsweise mindestens ein Paar von Kniehebeln vorgesehen, deren Kraftumlenkungs-Winkel im wesentlichen entgegengesetzt gleich gross sind, so dass der gesamte Kraftumlenkungs-Winkel beider Kniehebel zusammen im wesentlichen verschwindend klein ist.

Wenn eine Anordnung mit ausschliesslich vertikalen oder horizontalen Koppeln gewünscht wird, so werden Kniehebel verwendet, die zwischen dem einleitenden und dem weiterleitenden Arm einen Winkel von im wesentlichen 90°, und zwischen dem weiterleitenden und dem verankerten Arm einen Winkel von 90°+ϕ aufweisen. Der von einem solchen Kniehebel erzielbare Untersetzungsfaktor hat den Wert von tan (ϕ).

Der kleine Platzbedarf der Arme eines Kniehebels beeinträchtigt die Stabilität des Ständers nur unwesentlich. Aufgrund des kleinen Platzbedarfs und aufgrund der vorgebbaren Umlenkungswinkel können Kniehebel in einer netzartigen Anordnung eine sehr hohe Untersetzungs-Dichte erzielbar machen. Dabei können sie sowohl alleine als weitere Hebel oder gegebenenfalls auch mit mindestens einem weiteren geraden Hebel eingesetzt werden. Ein solcher weiterer gerader Hebel ist entweder am Ständer angeordnet oder an einem Hebel schwenkbar gelagert.

Bei mehr als zwei parallel übereinander angeordneten geraden Hebeln wird mindestens ein Hebelende von der zu untersetzenden Kraft gegen das anschliessende Hebelende bewegt. Weil diese Stosskraft nicht mit einer Koppel übertragbar ist, werden - wie bereits erwähnt - Übergriffe mit einem stossbelastbaren Hebelteil und einer zugbelastbare Koppel vorgesehen. Anstelle eines solchen platzaufwendigen und nicht untersetzenden Übergriffes, kann mit zwei aneinander anschliessenden Kniehebeln die Stosskraft in eine parallele Zugkraft übertragen und gleichzeitig stark untersetzt werden. Dazu werden zwei Kniehebel mit einem Kraftumlenkungs-Winkel von je 90° so hintereinander angeordnet, dass sich ein totaler Kraftumlenkungs-Winkel von 180° ergibt. Der Kraftumlenkungs-Winkel von 180° ermöglicht es Hebelenden miteinander zu verbinden, die sich bei der Lastaufnahme gegeneinander bewegen sollen.

Es versteht sich von selbst, dass anstelle der horizontal ausgerichteten geraden Hebel auch beliebig ausgerichtete Hebel eingesetzt werden können. Um verschieden ausgerichtete gerade Hebel miteinander zu verbinden, können Kniehebel mit entsprechenden Kraftumlenkungs-Winkeln eingesetzt werden. Durch den Einsatz von Kniehebeln und/oder an einem anderen Hebel gelagerten geraden Hebeln wird die Anordnungsmöglichkeit für Hebel im Materialblock wesentlich erhöht. Die erhöhte Anordnungsfreiheit ermöglicht optimale Anordnungen grosser Kraftuntersetzungen bei kleinem Platzbedarf.

Die Zeichnungen erläutert die Erfindung anhand von Ausführungsbeispielen. Dabei zeigt
- Fig. 1: eine Seitenansicht eines Materialblocks mit einem Ständer, einer Parallelogrammführung und einer geschachtelten Hebelanordnung mit drei Hebeln,
- Fig. 2: eine Seitenansicht eines Materialblocks mit einem Ständer und einer geschachtelten Hebelanordnung mit vier Hebeln und
- Fig. 3: eine Seitenansicht eines Materialblocks mit einem Ständer, einer Parallelogrammführung und einer Hebelanordnung mit zwei Kniehebeln

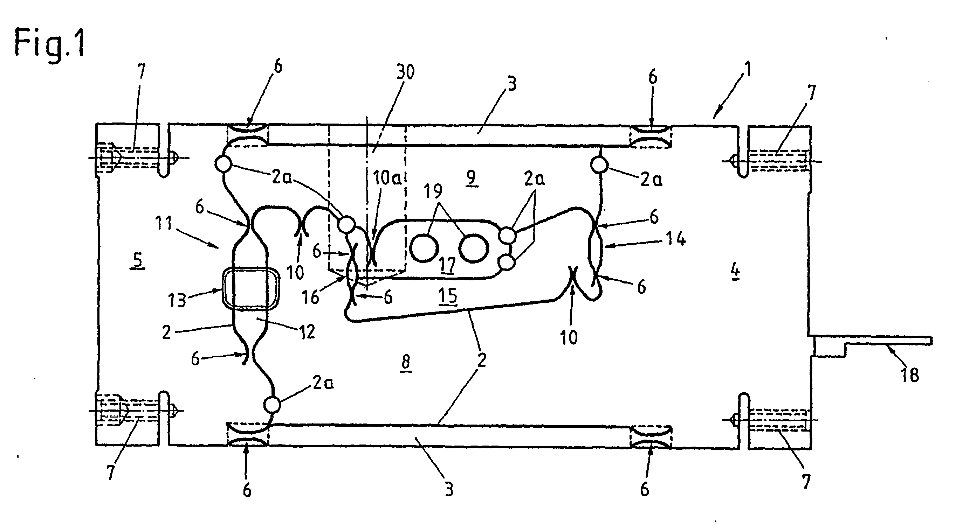

Fig. 1 zeigt einen kubischen Materialblock 1, der von materialfreien Trennbereichen 2 in Teilbereiche unterteilt ist. Die Trennbereiche 2 durchsetzen den Materialblock 1 senkrecht zu dessen zum Betrachter weisenden Hauptebene vollständig und sind durch eine minimale Materialwegnahme erzeugbar. Beispielsweise werden die Trennbereiche 2 durch Funkenerosion mit einem Erosionsdraht ausgebildet. Zur leichten Durchführbarkeit des Funkenerosionsverfahrens ist vorgesehen, dass der Materialblock 1 für jeden zusammenhängenden dünnen Trennbereich, bzw. für jede Schnittlinie, eine damit in Verbindung stehende, zur Einführung eines Funkenerosionsdrahtes dienende Bearbeitungsbohrung 2a aufweist. Entlang des oberen und des unteren langen Randes des Materialblockes 1 verläuft je ein Teilbereich der als Parallelogrammlenker 3 ausgebildet ist. Quer zu den Parallelogrammlenkern 3 verlaufen entlang der kurzen Berandungen des Materialblockes 1 auf einer ersten Seite ein feststehender Parallelogrammschenkel 4 und auf einer zweiten Seite ein beweglicher Parallelogrammschenkel 5. Die Verbindungen zwischen den Parallelogrammlenkern 3 und den Parallelogrammschenkeln 4,5 sind als Biegestellen 6 ausgebildet. Diese Biegestellen ermöglichen eine minimale Parallelbewegung des beweglichen Parallelogrammschenkels 5 relativ zum festen Parallelogrammschenkel 4.

Bei Waagen wird der feststehende Parallelogrammschenkel 4 mit in Befestigungsbohrungen 7 eingesetzten Schrauben an einem nicht dargestellten Gehäuse festgesetzt und am beweglichen Parallelogrammschenkel 5 wird mit in Befestigungsbohrungen 7 eingesetzten Schrauben eine nicht dargestellte Lastaufnahme befestigt. Die Bewegung der Lastaufnahme bzw. des beweglichen Parallelogrammschenkels 5 wird nun von der beschriebenen Parallelogrammführung geführt. Um zu Verhindern, dass die Führung die Beweglichkeit der Lastaufnahme unerwünscht beeinträchtigt, sind die Biegestellen exakt an den Eckpunkten eines Parallelogramms angeordnet und als dünne, biegbare Materialbereiche ausgebildet.

Um den Materialblock 1 in einer Waage mit einem magnetischen Kraftkompensationssystem einsetzen zu können, muss die von der Lastaufnahme auf den beweglichen Parallelogrammschenkel 4 wirkende Kraft in einen Kraftbereich untersetzt werden in dem das Kompensationssystem einsetzbar ist. Dazu sind Teilbereiche im Materialblock 1 innerhalb der Parallelogrammführung 3 bis 6 als Hebelanordnung mit einem grossen Untersetzungsfaktor ausgebildet. Der grosse mit dem feststehenden Parallelogrammschenkel 4 einstückig ausgebildete Teilbereich bildet einen Ständer 8. Am Ständer 8 ist ein Teilbereich als erster Hebel 9 an einer festen Abstützstelle 10 schwenkbar abgestützt. Die Abstützstelle ist als Biegestelle bzw. als dünner, biegbarer Verbindungsbereich vom Ständer zum ersten Hebel 9 ausgebildet. Die auf den beweglichen Parallelogrammschenkel 5 wirkende Kraft wird über eine erste Koppel 11 auf den kurzen Arm des ersten Hebels 9 übertragen. Die erste Koppel 11 umfasst zwei Biegestellen 6 und einen dazwischenliegenden Koppelbereich 12, dessen mittlerer Abschnitt durch von der Vorder- und von der Hinterseite her angebrachte Ausnehmungen 13 auf eine dünne zentrale Verbindung reduziert ist. Durch diese zentrale Verbindung werden Torsionskräfte zwischen dem beweglichen und dem festen Parallelogrammschenkel in Längsrichtung des Materialblockes 1 nicht auf den ersten Hebel 9 übertragen. Die untere Biegestelle 6 verbindet den beweglichen Parallelogrammschenkel 5 mit dem Koppelbereich 12 und die obere Biegestelle 6 den Koppelbereich mit dem ersten Hebel 9.

Der erste Hebel 9 ist über eine zweite Koppel 14 mit einem zweiten Hebel 15 verbunden wobei die zweite Koppel 14 zwei Biegestellen 6 und einen dazwischen liegenden Koppelbereich 12 umfasst. Die geometrische Anordnung ist vorzugsweise so gewählt, dass die oberen Biegestellen 6 der ersten und der zweiten Koppel 11, 14 und die feste Abstützstelle 10 auf einer Geraden liegen. Dadurch können die von der Kraftuntersetzung herrührenden Fehler so klein wie möglich gehalten werden. Der zweite Hebel 15 ist mit einer festen Abstützstelle 10 am Ständer 8 schwenkbar abgestützt und über eine dritte Koppel 16, die wiederum zwei Biegestellen 6 und dazwischen einen Koppelbereich umfasst, mit einem dritten Hebel 17 verbunden. Die geometrische Anordnung ist wiederum so gewählt, dass je eine Biegestelle 6 der zweiten und der dritten Koppel 14, 16 und die feste Abstützstelle 10 des zweiten Hebels 15 auf einer Geraden liegen.

Der dritte Hebel 17 ist über eine bewegliche Abstützstelle 10a am ersten Hebel 9 schwenkbar abgestützt. Die Bewegung des dritten Hebels wird über eine nicht dargestellte gabelförmige Verlängerung, die an den Befestigungsbohrungen 19 befestigbar ist, zu einer nicht dargestellten Kraftkompensationsvorrichtung übertragen, wobei der feste Teil dieser Kraftkompensationsvorrichtung am feststehenden Parallelogrammschenkel 4, insbesondere an einem von diesem vorstehenden Träger 18 befestigbar ist. Der bewegliche Teil der Kraftkompensationsvorrichtung ist am freien Ende der gabelförmigen Verlängerung angeordnet. Zwischen dem beweglichen und dem festen Teil der Kompensationsvorrichtung sind von einer Spule ausgehende, regelbare Magnetkräfte erzielbar, die abhängig von einem Positionsgeber so gesteuert werden, dass der bewegliche Teil in die Nulllage gelangt. Der in der Nulllage durch die Spule fliessende Kompensationsstrom ist ein Mass für die zu messende Kraft.

Die beschriebenen drei Hebel 9, 15 und 17 haben von der Abstützstelle 10 bzw. 10a ausgehend je einen kurzen und einen langen Arm. Weil der Krafteintrag am kurzen und die Weiterleitung der Kraft am langen Arm erfolgt, wird die vom jeweiligen Hebel zu ertragende Kraft von Hebel zu Hebel kleiner. Entsprechend ist der erste Hebel 9 am massivsten ausgebildet. Der zweite Hebel kann gegen das Ende des langen Armes hin bereits mit kleinerer Mächtigkeit gebaut werden. Der im Materialblock ausgebildete Teil des dritten Hebels beansprucht lediglich einen nicht anderweitig benötigten Zwischenraum zwischen dem ersten und dem zweiten Hebel. Diese optimale Platzausnützung ist nur möglich, weil der dritte Hebel am ersten abgestützt ist. Auch die Ausführung, welche den beweglichen Parallelogrammschenkel 5 und die drei direkt übereinander, parallel verlaufenden Hebel 9, 15 und 17 ausschliesslich mit Zugkräfte übertragenden Koppeln 11, 14 und 16 verbindet, ist erst aufgrund der Abstützung mindestens eines Hebels 17 an einem vorgeordneten Hebel möglich. Weil keine Übergriffe mit einen stossbelastbaren Hebelteil und einer zugbelastbaren Koppel benötigt werden, können sich der zweite und der dritte Hebel über einen grösstmöglichen Bereich zwischen dem feststehenden Parallelogrammschenkel 4 und dem Ständerbereich mit der Abstützstelle10 erstrecken. Der Ständer 8 gewährleistet bei den Abstützstellen 10 die benötigte Stabilität auch wenn der Materialblock gleich gross ist, wie bei einer Kraftuntersetzungs-Vorrichtung mit lediglich zwei Hebeln.

Die Kraftuntersetzung der beschriebenen zusammenwirkenden ersten drei Hebel 9, 15 und 17, von denen der dritte am ersten abgestützt bzw. gelagert ist, entspricht - wie bereits beschrieben - dem Produkt der Einzeluntersetzungen und einer Korrektur. Das Produkt der Untersetzungsfaktoren jedes einzelnen Hebels würde eine Untersetzung von 1/1455 ergeben. Mit der Korrektur aufgrund des am ersten Hebel gelagerten dritten Hebels ergibt sich eine effektive Untersetzung von 1/1484. Bei einem am ersten Hebel gelagerten dritten Hebel hängt die Korrektur bzw. die effektive Untersetzung auch von der Distanz zwischen dem Lager des ersten und dem Lager des dritten Hebels ab. Im vorliegenden Fall hat diese Distanz einen Wert von 14.2mm. Das heisst also, dass die Untersetzung aufgrund der Lagerung eines Hebels an einem vorgeordneten Hebel erhöht wird. Dies ist nebst dem kleineren Platzbedarf ein weiterer Vorteil einer erfindungsgemässen Lösung mit mindestens einem Hebel, der an einem vorgeordneten Hebel gelagert ist.

Weil die auf den dritten Hebel wirkenden Kräfte deutlich kleiner sind als die Ausgangskräfte, müssen die dritte Koppel und die Abstützstelle 10a des dritten Hebels 17 genügend weich sein, um Störungen der Kräfteübertragung zu vermeiden. In der dargestellten Ausführungsform ist eine Sackbohrung 30 zentral von oben in den Materialblock 1 abgesenkt worden, die sich über den Bereich mit der dritten Koppel 16 und der Abstützstelle 10a des dritten Hebels 17 erstreckt.

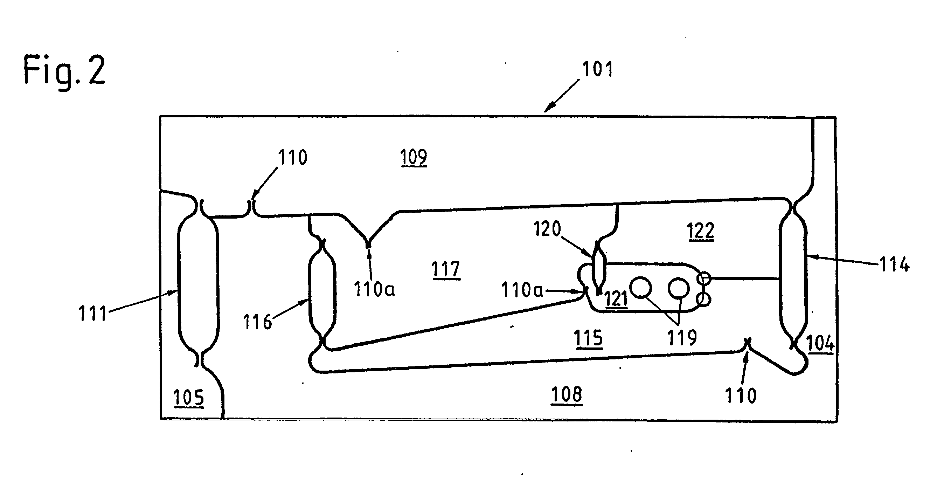

Fig. 2 zeigt einen Materialblock 101 ohne Parallelogrammführung lediglich mit einem Ständer 108 und einer geschachtelten Hebelanordnung mit vier Hebeln. Dieser Materialblock 101 kann in eine davon getrennte Führungsvorrichtung eingesetzt werden, wobei die bewegliche Seite der Führungsvorrichtung mit dem zu bewegenden Teil 105 des Materialblocks 101 und die feste Seite der Führungsvorrichtung mit dem festen Teil 104 verbunden ist. Es versteht sich von selbst, dass es sich beim dargestellten Bereich lediglich um den Inneren Bereich eines Materialblockes 1 mit einer Parallelogrammführung 3 bis 6 handeln kann.

Die erste Koppel 111 verbindet den zu bewegenden Teil 105 mit dem ersten Hebel 109. Der erste Hebel 109 wird über eine zweite Koppel 114 mit dem zweiten Hebel 115 verbunden. Anschliessend ist der zweite Hebel 115 über die dritte Koppel 116 mit dem dritten Hebel 117 verbunden. Der dritte Hebel 117 ist wiederum über eine vierte Koppel 120 mit einem vierten Hebel 121 verbunden. Im vierten Hebel 121 sind Befestigungsbohrungen 119 zum Befestigen eines gabelförmigen Hebelteils ausgebildet. Der Teilbereich 122 hat keine Funktion und kann somit herausgenommen werden. Der erste und der zweite Hebel 109 und 115 sind bei den festen Abstützstellen 110 am Ständer 108 abgestützt. Der dritte Hebel 117 ist bei der bewegbaren Abstützstelle 110a am ersten Hebel 109 und der vierte Hebel 121 bei der bewegbaren Abstützstelle 110a am zweiten Hebel 115 abgestützt. Beim vierten Hebel 121 liegt die Abstützstelle 110a am einen Hebelende, bzw. die kraftaufnehmende und die kraftweiterleitende Stelle des vierten Hebels 121 liegen beide auf dem selben Arm des Hebels. Dieses Ausführungsbeispiel zeigt, dass die Vorrichtung zur Kraftuntersetzung auch mehrere je an einem vorgängigen Hebel abgestützte Hebel umfassen kann. Es versteht sich von selbst, dass nebst den dargestellten geraden Hebeln auch abgewinkelte Hebel eingesetzt werden können, so dass zwischen den beiden Armen andere Winkel als 180° oder 0° ausgebildet sind.

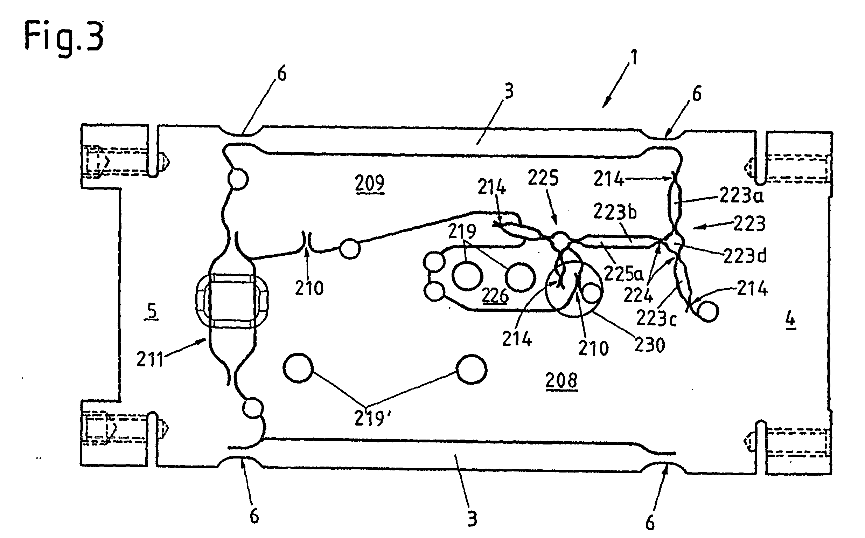

Fig. 3 zeigt ein Ausführungsbeispiel bei dem der erste Hebel 209 über die erste Koppel 211 mit der Lastaufnahme verbunden und bei der Abstützstelle 210 am Ständer 208 abgestützt ist. Vom ersten Hebel 209 wird die untersetzte Kraft über eine zweite Koppel in der Form einer Koppelbiegestelle 214 auf einen ersten Kniehebel 223 übertragen. Der erste Kniehebel 223 umfasst einen eine Kraft einleitenden Arm 223a, einen die untersetzte Kraft weiterleitenden Arm 223b und einen verankerten Arm 223c. Die drei Arme 223a, 223b und 223c sind bei einer gemeinsamen beweglichen Schwenkachse 223d über Gelenkbiegestellen 224 miteinander verbunden, wobei beim Einwirken einer Kraft auf den einleitenden Arm, die Schwenkachse 223d etwas bewegt wird. Der erste Kniehebel 223 ist mit dem verankerten Arm 223c über eine Koppelbiegestelle 214 mit dem Ständer 208 verbunden. Sein weiterleitender Arm 223b schliesst im wesentlichen einstückig an den einleitenden Arm 225a eines zweiten Kniehebels 225 an. Der zweite Kniehebel 225 ist mit dem verankerten, in der Zeichnung sich nach links erstreckenden Arm über eine Koppelbiegestelle 214 mit dem Ständer 208 verbunden. Sein weiterleitender, in der Zeichnung nach unten gerichteter Arm ist über eine Koppelbiegestelle 214 mit einem weiteren Hebel 226 verbunden. Der weitere Hebel 226 ist bei einer Abstützstelle 210 am Ständer 208 abgestützt. Weil die auf den weiteren Hebel 226 wirkenden Kräfte klein sind, müssen die Koppelbiegestelle 214 und die Abstützstelle 210 des weiteren Hebels 226 genügen weich sein, um Störungen der Kräfteübertragung zu vermeiden. In der dargestellten Ausführungsform ist von der Front- und von der Rückseite her je eine Sackbohrung 230 in den Materialblock 1 eingebracht. Am weiteren Arm 226 wird wiederum an den Bohrungen 219 ein nicht dargestellter gabelförmiger Hebelteil befestigt, um den weiteren bzw. letzten Hebel mit der Kompensationsvorrichtung zu verbinden.

Bei beiden Kniehebeln 223 und 225 ist zwischen dem einleitenden und dem weiterleitenden Arm ein Winkel von im wesentlichen 90°, und zwischen dem weiterleitenden und dem verankerten Arm ein Winkel von 90°+ϕ ausgebildet, wobei der von einem solchen Kniehebel erzielbare Untersetzungsfaktor dem Wert von tan(ϕ) entspricht. Um eine möglichst grosse Untersetzung zu erzielen, ist der Winkel ϕ klein, vorzugsweise kleiner als 20°, insbesondere im wesentlichen 12°. Weil der erste Kniehebel 223 einen Kraftumlenkungs-Winkel von 90° hat, wird diesem ein zweiter Kniehebel 225 mit einen Kraftumlenkungs-Winkel von 90° in der entgegengesetzten Richtung nachgeschaltet, so dass die Kraft vor und nach den beiden Kniehebeln 223, 225 gleich ausgerichtet ist. Auch wenn der Kraftumlenkungs-Winkel der verwendeten Kniehebel nicht 90° beträgt, ist es zweckmässig wenn zwei Kniehebel vorgesehen werden, die ein Paar mit im wesentlichen entgegengesetzt gleich grossen Kraftumlenkungs-Winkeln bilden, so dass der gesamte Kraftumlenkungs-Winkel beider Kniehebel zusammen im wesentlichen verschwindend klein ist.

Es versteht sich von selbst, dass zwischen den beiden Kniehebeln auch noch mindestens ein gerader Hebel eingesetzt werden könnte. Es würden dann nicht alle. geraden Hebel parallel ausgerichtet sein, was unter Umständen erwünscht sein kann, insbesondere wenn dabei eine Erhöhung der Untersetzungsdichte erzielbar ist. Der Platzbedarf der Kniehebel ist sehr klein, weil die wirksamen Kräfte im wesentlichen als Zugkräfte auftreten.

In der Ausführungsform gemäss Fig. 3 ist der feste Teil der Kraftkompensationsvorrichtung am Ständer 208 mittels Befestigungsbohrungen 219' befestigbar. Der bewegliche Teil der Kraftkompensationsvorrichtung ist am freien Ende der gabelförmigen Verlängerung des weiteren Hebels 226 angeordnet. Zwischen dem beweglichen und dem festen Teil der Kompensationsvorrichtung sind von einer Spule ausgehende, regelbare Magnetkräfte erzielbar, die abhängig von einem Positionsgeber so gesteuert werden, dass der bewegliche Teil in die Nulllage gelangt. Der in der Nulllage durch die Spule fliessende Kompensationsstrom ist ein Mass für die zu messende Kraft.

## Patentansprüche

1. Vorrichtung zur Kraftuntersetzung in einer Kraftmessvorrichtung, mit einem an einem Ständer (1) abgestützten ersten Hebel (9, 109, 209) auf den die zu untersetzende Kraft über eine erste Koppel (11, 111, 211) übertragbar ist und mit mindestens einem weiteren Hebel, der über eine weitere Koppel mit einem vorgeordneten Hebel verbunden ist, wobei der Ständer (8, 108, 208), die Koppel und die Hebel zumindest teilweise von gegeneinander abgetrennten Materialbereichen eines einstückigen Materialblocks (1) gebildet sind, **dadurch gekennzeichnet, dass** mindestens einer der weiteren Hebel (17, 117, 121, 223, 225) eine relativ zum Ständer (8, 108, 208) bewegliche Schwenkachse hat.

2. Vorrichtung nach Anspruch 1, **dadurch gekennzeichnet, dass** der mindestens eine weitere Hebel (17, 117, 121) mit einer beweglichen Schwenkachse an einem vorgeordneten Hebel (9, 109, 115) gelagert ist, wobei die bewegliche Schwenkachse mit diesem vorgeordneten Hebel (9, 109, 115) bewegbar ist.

3. Vorrichtung nach Anspruch 2, **dadurch gekennzeichnet, dass** drei Hebel (9, 15, 17) ausgebildet sind, wobei der erste und der zweite Hebel (9, 15) am Ständer (8) und der dritte Hebel (17) am ersten Hebel (9) schwenkbar gelagert ist.

4. Vorrichtung nach Anspruch 2, **dadurch gekennzeichnet, dass** vier Hebel (109, 115, 117, 121) ausgebildet sind, wobei der erste und der zweite Hebel (109, 115) am Ständer (108), der dritte Hebel (117) am ersten Hebel (109) und der vierte Hebel (121) am zweiten Hebel (115) schwenkbar gelagert ist.

5. Vorrichtung nach Anspruch 1, **dadurch gekennzeichnet, dass** der mindestens eine weitere Hebel mit einer beweglichen Schwenkachse ein Kniehebel (223, 225) mit einem eine Kraft einleitenden, einem weiterleitenden und einem verankerten Arm ist, dessen drei Arme bei der Schwenkachse miteinander verbunden sind, wobei beim Einwirken einer Kraft auf den einleitenden Arm, die Schwenkachse etwas bewegt wird.

6. Vorrichtung nach Anspruch 5, **dadurch gekennzeichnet, dass** mindestens ein Kniehebel (223) mit seinem einleitenden Arm (223a) über eine Koppel (214) mit einem vorgeordneten Hebel (209), mit seinem weiterleitenden Arm (223b) mit dem nachgeordneten Hebel (225) und mit dem verankerten Arm (223c) über eine Koppel (214) mit dem Ständer (208) verbunden ist.

7. Vorrichtung nach Anspruch 5 oder 6, **dadurch gekennzeichnet, dass** mindestens ein Paar von Kniehebeln (223, 225) ausgebildet ist, wobei die beiden Kniehebel (223, 225) jedes Paares so ausgebildet sind, dass ihre Kraftumlenkungs-Winkel im wesentlichen entgegengesetzt gleich gross sind, so dass der gesamte Kraftumlenkungs-Winkel beider Kniehebel zusammen im wesentlichen verschwindend klein ist.

8. Vorrichtung nach einem der Ansprüche 5 bis 7, **dadurch gekennzeichnet, dass** bei mindestens einem Kniehebel (223) zwischen dem einleitenden und dem weiterleitenden Arm (223a, 223b) ein Winkel von im wesentlichen 90°, und zwischen dem weiterleitenden und dem verankerten Arm (223b, 223c) ein Winkel von 90°+ϕ ausgebildet ist, wobei der von diesem Kniehebel (223) erzielbare Untersetzungsfaktor dem Wert von tan(ϕ) entspricht.

## Claims

1. A force-reduction mechanism for a force-measuring device comprising a first lever (9, 109, 209) supported on a stationary support (1), where the force to be reduced can be transmitted to this lever by way of a first coupling element (11, 111, 211), and at least one additional lever connected by another coupling element to a preceding lever, where the stationary supports (8, 108, 208), the coupling elements and the levers are formed at least in part by mutually separated areas of material of a monolithic block of material (1), **characterized in that** at least one of the additional levers (17, 117, 121, 223, 225) has a fulcrum axis that is movable relative to the stationary support (8, 108, 208).

2. The device according to claim 1, **characterized in that** the minimum of one additional lever having a movable fulcrum axis (17, 117, 121) is mounted on a preceding lever (9, 109, 115), with the movable fulcrum axis being movable with this preceding lever (9, 109, 115).

3. The device according to claim 2, **characterized in that** three levers (9, 15, 17) are provided, the first and second levers (9, 15) being mounted pivotably on the stationary support (8) and the third lever (17) being pivotably mounted on the first lever (9).

4. The device according to claim 2, **characterized in that** four levers (109, 115, 117, 121) are provided, the first and second levers (109, 115) being mounted pivotably on the stationary support (108), the third lever (117) being pivotably mounted on the first lever (109) and the fourth lever (121) being pivotably mounted on the second lever (115).

5. The device according to claim 1, **characterized in that** the minimum of one additional lever having a movable fulcrum axis is a knee-joint lever (223, 225) with a force-introducing arm, a force-relaying arm and an anchored arm, its three arms being joined together at the fulcrum axis, whereby the fulcrum axis is moved slightly when a force acts on the force-introducing arm.

6. The device according to claim 5, **characterized in that** at least one knee-joint lever (223) with its force-introducing arm (223a) is connected by way of a coupling element (214) to a preceding lever (209), with its force-relaying arm (223b) to the following lever (225) and with the anchored arm (223c) to the stationary support (208) by way of a coupling element (214).

7. The device according to claim 5 or 6, **characterized in that** at least one pair of knee-joint levers (223, 225) is embodied, with the two knee-joint levers (223, 225) of each pair being designed so that their force deflecting angles are essentially the same but in opposite directions, so that the total force deflecting angle of the two knee-joint levers together is essentially negligible.

8. The device according to one of claims 5 through 7, **characterized in that** at least at one of the knee-joint levers (223), an angle of essentially 90° is formed between the force-introducing arm (223a) and the force-relaying arm (223b), and an angle of 90° + ϕ is formed between the force-relaying arm (223b) and the anchored arm (223c), and the force reduction factor attainable by this knee-joint lever (223) corresponds to a numerical value of tan (ϕ).

## Revendications

1. Dispositif pour la réduction de force dans un dispositif de mesure de force, avec un premier levier (9, 109, 209) s'appuyant à un support (1), sur lequel la force à réduire peut être transmise par l'intermédiaire d'un premier accouplement (11, 111, 211) et avec au moins un levier supplémentaire, qui est relié par l'intermédiaire d'un accouplement supplémentaire à un levier précédent, le support (8, 108, 208), les accouplements et les leviers étant constitués au moins partiellement par des zones de matière séparées les unes des autres d'un bloc de matière en une pièce (1), **caractérisé en ce qu'**au moins un des leviers supplémentaires (17, 117, 121, 223, 225) a un axe de pivotement mobile par rapport au support (8, 108, 208).

2. Dispositif selon la revendication 1, **caractérisé en ce que** le levier supplémentaire (17, 117, 121) avec un axe de pivotement mobile dont au moins un est présent est positionné sur un levier précédent (9, 109, 115), l'axe de pivotement mobile pouvant être déplacé avec ce levier précédent (9, 109, 115).

3. Dispositif selon la revendication 2, **caractérisé en ce que** trois leviers (9, 15, 17) sont formés, le premier et le deuxième levier (9, 15) étant positionnés en pouvant pivoter sur le support (8) et le troisième levier (17) sur le premier levier (9).

4. Dispositif selon la revendication 2, **caractérisé en ce que** quatre leviers (109, 115, 117, 121) sont formés, le premier et le deuxième levier (109, 115) étant positionnés en pouvant pivoter sur le support (108), le troisième levier (117) sur le premier levier (109) et le quatrième levier (121) sur le deuxième levier (115).

5. Dispositif selon la revendication 1, **caractérisé en ce que** le levier supplémentaire avec un axe de pivotement mobile dont au moins un est présent est un levier coudé (223, 225) avec un bras d'introduction, un bras de transmission de force et un bras ancré, les trois bras étant reliés ensemble sur l'axe de pivotement, l'axe de pivotement étant un peu déplacé lors de l'action d'une force sur le bras d'introduction.

6. Dispositif selon la revendication 5, **caractérisé en ce qu'**au moins un levier coudé (223) est relié par son bras d'introduction (223a) par l'intermédiaire d'un accouplement (214) à un levier précédent (209), par son bras de transmission (223b) au levier suivant (225) et par son bras ancré (223c) par l'intermédiaire d'un accouplement (214) au support (208).

7. Dispositif selon la revendication 5 ou 6, **caractérisé en ce qu'**au moins une paire de leviers coudés (223, 225) est formée, les deux leviers coudés (223, 225) de chaque paire étant formés de manière à ce que leur angle opposé d'inversion de force soit globalement identique, de manière à ce que l'angle total d'inversion de force des deux leviers ensemble soit faible au point de disparaître.

8. Dispositif selon une des revendications 5 à 7, **caractérisé en ce que**, sur au moins un levier coudé (223), entre le bras d'introduction et le bras de transmission (223a, 223b), un angle d'environ 90° et, entre le bras de transmission et le bras ancré (223b, 223c), un angle de 90°+ϕ soit constitué, le facteur de réduction pouvant être atteint par ce levier coudé (223) équivalant à la valeur de tan (ϕ).
